# EUROPEAN PATENT SPECIFICATION

(11) **EP 2 176 472 B1**
(45) Date of publication and mention of the grant of the patent: **16.05.2012**
(21) Application number: 08793966.6
(22) Date of filing: 30.07.2008
(51) Int. Cl.: E04F 19/04, H02G 3/06

(54) **SKIRTING BOARD FASTENER**
SOCKELLEISTENFIXIERER
ATTACHE POUR UNE PLINTHE

(30) Priority: 02.08.2007 PL 38306707; 07.07.2008 PL 38559108
(43) Date of publication of application: 21.04.2010
(73) Proprietor: Galas, Adam Slawomir, 15-245 Bialystok (PL)
(72) Inventor: Galas, Adam Slawomir, 15-245 Bialystok (PL)
(74) Representative: Misztak, Irena
(86) International application number: PCT/PL2008/000056
(87) International publication number: WO 2009/017432

(56) References cited:
- WO-A-96/28681
- PL-A- 381 506
- PL-A1- 370 968
- PL-U1- 114 844

## Description

The object of the present invention is a skirting fastener, and more particularly a skirting board fastener, used for connecting longitudinal profile elements of a skirting, especially at the corners of a compartment.

Polish Patent Application No. P 370968 discloses a skirting system comprising a joint element in form of a corner fitting fastener having an uniform body made up of two s-shaped bended walls, having a common edge. At the inner side of each wall click webs are placed, being used for connecting a joint element with longitudinal elements of a skirting system.

The description of the Polish Utility Model No. W 114844 presents a structure of a skirting board fastener, the outer area of which is a mapping of the outer area of a skirting board. There are fixing fins provided with fixing elements at the inner side of a skirting fastener.

Due to the solution as presented in the Polish Patent Application No. P 381506, a skirting board fastener shows a convex body, the outer shape of which fits the profile of the skirting and which is provided with fitting up elements. That skirting fastener constitutes a two-part structure comprising a lower portion and an upper portion, being separable connected by means of at least one click joint.

Document WO 96/28681 A discloses an angle connecting device for a conduit with a body in the form of a channel and a cover, of the type comprising a connector for joining the bodies of two conduit portions and a cap for joining the covers of said two portions, in which the cap comprises two uprights which are covered and assembled by a skin of flexible and elastic material. In this connecting device, the cap is attached to a connector via fitting elements which necessarily require complementary fitting elements provided on the connector.

The object of the present invention is to provide a skirting fastener of a simple construction that does not require additional connectors and complementary fitting elements provided thereon.

According to the invention a skirting fastener is provided, in particular a skirting board fastener, comprising a double-walled body the outer shape of which fits the profile of the skirting. The skirting fastener of the invention is provided with fitting up elements, said body being made of a flexible plastics material, wherein the body walls are provided with stiffening inserts made of a stiff plastics material, the inserts being fixed to the walls and extending longitudinally thereto, and to each of the inserts fitting up elements are integrally and immovably attached.

The skirting fastener of the invention is characterized in that the stiffening inserts form with the fitting up elements, longitudinal profile elements having a "U"-shaped cross-section, wherein one of the arms of each "U"-shaped profile element constitutes a fitting up element and extends outside the body wall of the skirting fastener.

Preferably, the outer arm of each "U"-shaped profile element has a transverse indentation.

The stiffening inserts are preferably made of a thermoplastic polymer.

The body of the skirting fastener is preferably made of a thermoplastic elastomer.

The inserts preferably extend along almost the entire length of the body walls.

The structure of the skirting fastener according to the present invention enables the use of different types of plastics materials, fulfilling particular conditions with regard to the scope of hardness.

In the advantageous embodiment, the flexible plastics material, of which the skirting fastener body is made shall show Shore hardness of 60A through 50D. The most advantageous material hardness of the stiffening inserts in Shore scale shall show more than 60D.

Thanks to the flexibility of plastics material, of which the body of the skirting fastener according to the present invention has been made, the body can be used for connecting the longitudinal skirting elements in corners showing different angles of deflection because there is a possibility to set up the walls of the skirting fastener at different angles and to fit the skirting fastener to different shapes of suitable wall quoins of buildings or to other elements. However, the use of stiff inserts enables to ensure a proper stiffness of the whole structure and ensures the advantageous conditions for the use of fastener fitting up elements. Therefore, the solution according to the present invention constitutes an universal structure of the skirting fastener which excludes the necessity of producing fasteners, being only fitted for a determinate angle of deflection, or for a certain shape of a quoin, where the longitudinal skirting elements are to be connected with each other.

The object of the present invention is presented by way of embodiments, with reference to the accompanying drawings, in which:
Figure 1 shows the first embodiment of the skirting fastener according to the present invention along with the click fitting up elements in an end view;
Figure 2 shows the longitudinal section of the skirting fastener wall according to Figure 1;
Figure 3 shows an enlarged view, being inscribed by means of a circle in Figure 2;
Figure 4 shows a section along the line B-B in Figure 1;
Figure 5 shows the second embodiment of the skirting fastener according to the present invention in an end view;
Figure 6 shows a wall section of the skirting fastener along the line A-A in Figure 5;
Figure 7 shows a front view of the skirting fastener according to Figure 5;
Figure 8 shows section along the line B-B in Figure 7;
Figure 9 is a perspective view of the skirting fastener.

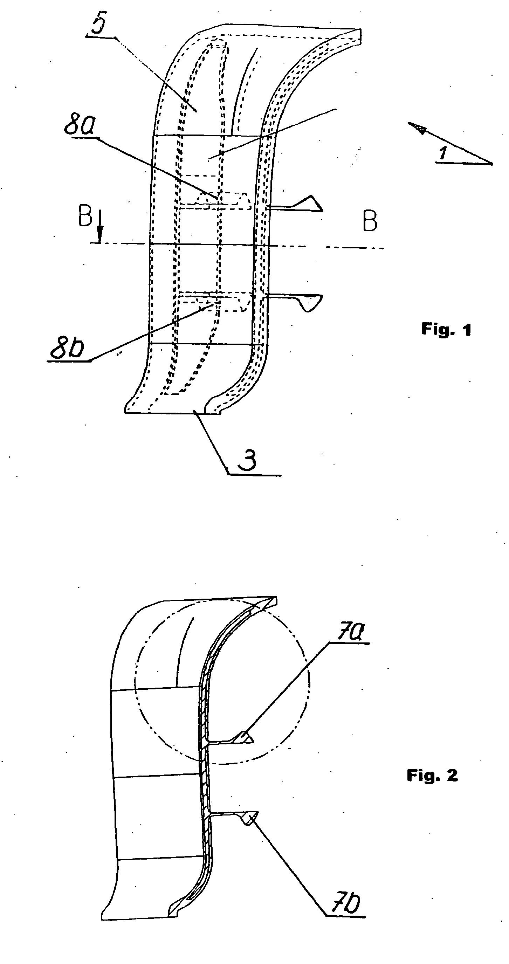

The subject invention has not been limited to that type of the skirting fastener which is presented in the embodiment from the drawing, which means that it also includes skirting fasteners of another kind, having different body structures. Figure 1 of the drawing shows structure of the inner corner skirting fastener of a skirting board. The body 1 of the skirting fastener is made of a thermoplastic elastomer and has two walls 2 and 3, being provided with fitting up elements 7a, 7b, 8a and 8b made of a thermoplastic polymer used for creation of a click joint provided with suitable longitudinal elements of the skirting profiles. The shape of the walls 2, 3 of the body 1 is fitted to the shape of the outer profile area of the longitudinal elements of the skirting, as an instance of the skirting board.

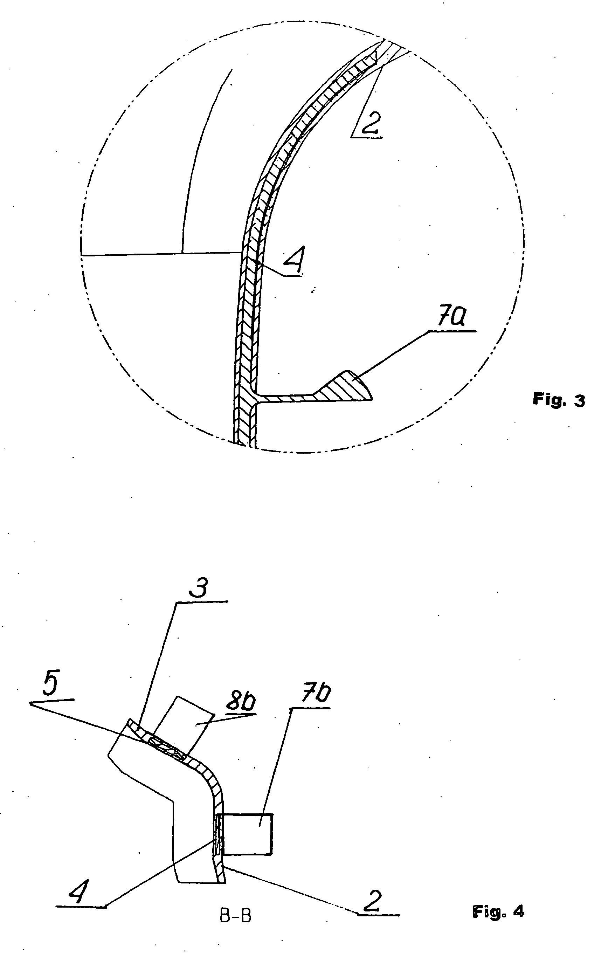

Each of the walls 2, 3 is provided with longitudinal stiffening inserts 4, 5, made of a thermoplastic polymer which are immovably connected with the material of the walls 2, 3. Those inserts take up almost the whole length of the walls 2, 3 of the body 1 of the skirting fastener and that is the reason why the body 1 shows the required lengthwise stiffness. The shape of inserts should be selected in such a way that at the determinate stiffness of the plastics material, of which the inserts have been made, it can ensure preservation of the proper shape of the whole skirting fastener. In the embodiment as presented in the drawing, the inserts 4, 5 are shaped in such a way that they are nearing the shape of the elongated rectangles. As it has been shown, in particular in Figure 4, the fitting up elements 7a, 7b, 8a, 8b are immovably and integrally connected with the proper stiffening inserts 4, 5 in such a way that they constitute one unit with them.

In the first embodiment, as disclosed in the drawing and as it has been shown in particular in Figure 2 and in Figure 3, the inserts 4, 5 have been sunk within walls 2, 3, however other solutions enabling an immovable connection of the stiffening inserts 4, 5 with the body walls and with the fitting up elements 7a, 7b, 8a, 8b, is also possible.

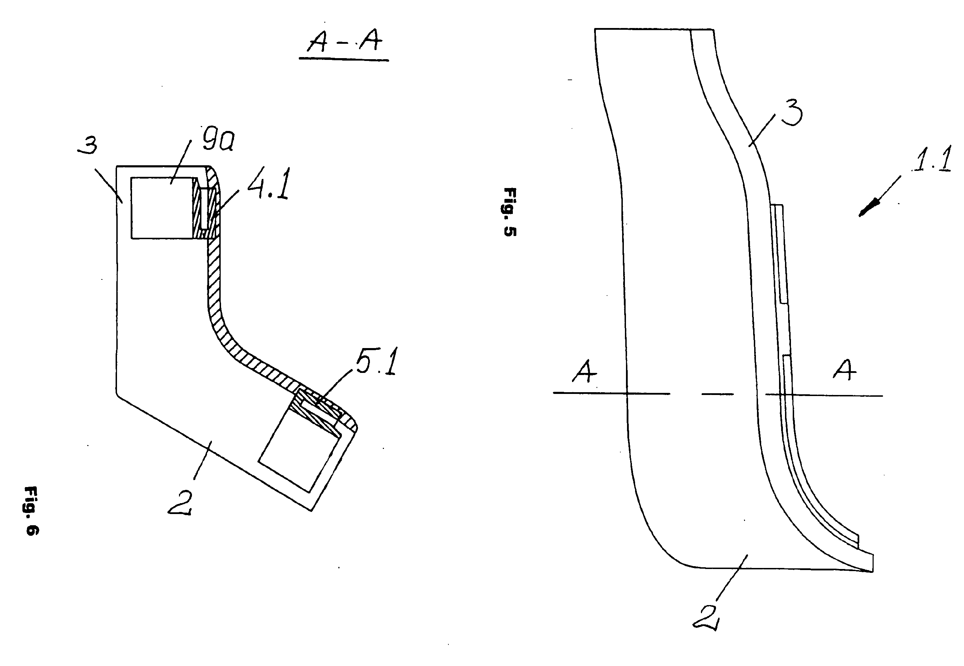

Figure 5 shows the second embodiment of the structure of a corner fastener of the skirting board in an end view. The body 1.1 of the skirting fastener is made of a thermoplastic elastomer and includes two walls 2 and 3, being provided with fitting up elements made of a thermoplastic polymer, used for creating a connection with corresponding longitudinal elements of the skirting board. The shape of the body 1.1 walls 2, 3, as in case of the above-described structure, is matched with the shape of the outer profile area of the longitudinal profile elements of the skirting, as an instance of the skirting board.

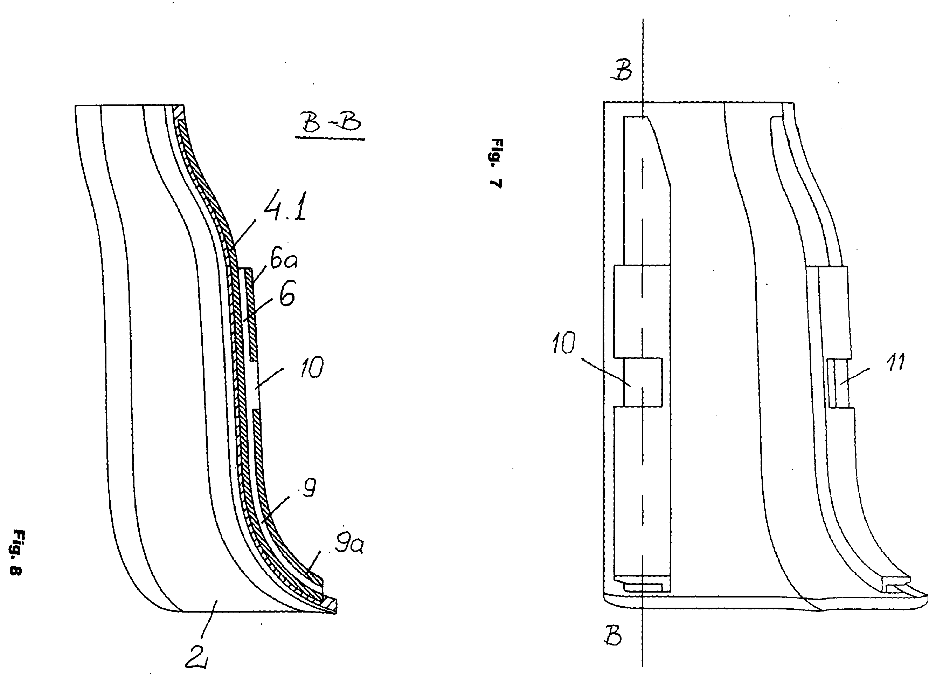

Each wall 2, 3, as presented in Figures 6 and 8, shows longitudinal stiffening inserts 4.1, 5.1, being made of a thermoplastic polymer which are immovable connected with the material of walls 2, 3.

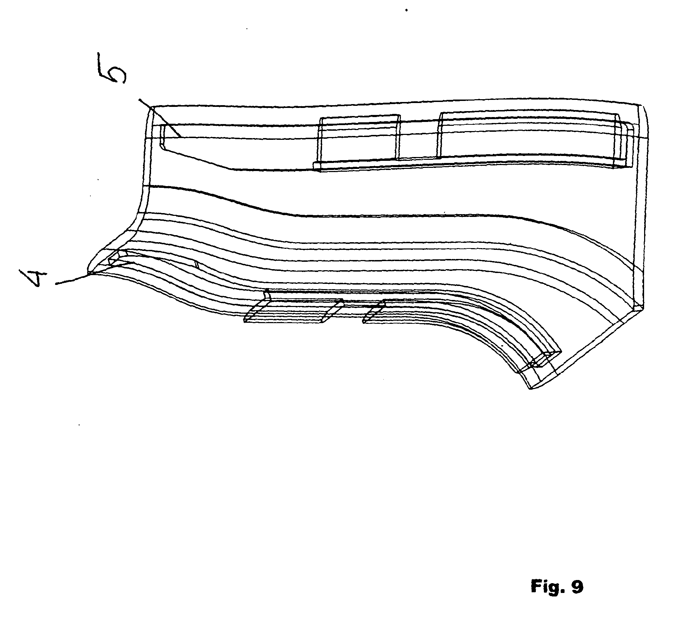

As presented in Figures 5-9 of the accompanying drawing, the inserts 4.1, 5.1 are shaped in such a way that they are nearing the shape of the elongated rectangles. The stiffening inserts 4.1, 5.1 constitute in their certain length section, being fitted to the shape of the skirting elements, longitudinal profile elements 6,9, approximating in their cross-section the shape of "u". One of the arms 6a, 9a of each profile elements 6,9 is placed outside the body 1.1 wall 2, 3 of the skirting fastener and creates a fitting up catch. The profile elements 6, 9 have transverse indentations 10, 11 in their outer arms 6a, 9a.

## Claims

1. A skirting fastener, in particular a skirting board fastener, comprising a double-walled body (1, 1.1) the outer shape of which fits the profile of the skirting, the skirting fastener being provided with fitting up elements (7a, 7b, 8a, 8b, 6a, 9a), and said body (1, 1.1) being made of a flexible plastics material, wherein the body walls (2, 3) are provided with stiffening inserts (4, 5, 4.1, 5.1) made of a stiff plastics material, the inserts being fixed to the walls (2, 3) and extending longitudinally thereto, and to each of the inserts (4, 5, 4.1, 5.1) the fitting up elements (7a, 7b, 8a, 8b, 6a, 9a) are integrally and immovably attached, **characterized in that** the stiffening inserts (4.1, 5.1) form with the fitting up elements (6a, 9a) longitudinal profile elements (6, 9) having a "U"-shaped cross-section, wherein one of the arms (6a, 9a) of each "U"-shaped profile element constitutes a fitting up element and extends outside the body wall (2, 3) of the skirting fastener for creating a connection with a skirting board.

2. A skirting fastener, as claimed in claim 1, **characterized in that** the outer arm (6a, 9a) of each "U"-shaped profile element (6, 9) has a transverse indentation (10, 11).

3. A skirting fastener, as claimed in claim 1, **characterized in that** the stiffening inserts (4, 5, 4.1, 5.1) are made of a thermoplastic polymer.

4. A skirting fastener, as claimed in claim 1, **characterized in that** the body (1, 1.1) is made of a thermoplastic elastomer.

5. A skirting fastener, as claimed in any of the preceding claims, **characterized in that** the inserts (4, 5, 4.1, 5.1) extend along almost the entire length of the body walls (2, 3).

## Patentansprüche

1. Leistenverbindungsstück, insbesondere ein Sockelleistenverbindungsstück, umfassend einen doppelwandigen Körper (1, 1.1), dessen Außengestallt an das Leistenprofil angepasst ist, der mit Montageelementen (7a, 7b, 8a, 8b, 6a, 9a) ausgestattet ist, wobei der Körper (1, 1.1.) aus einem biegsamen Kunststoffmaterial angefertigt ist, und zusätzlich sind die Wände (2, 3) des Körpers (1, 1.1) mit Versteifungseinlagen (4, 5, 4.1, 5.1) ausgestattet, die aus einem steifen Kunststoffmaterial angefertigt sind und darüber hinaus fest mit den Wänden (2, 3) verbunden sind, sowie sich entlang dieser Wände erstrecken, wobei an jede der Einlagen (4, 5, 4.1, 5.1) integral und immobil die Montageelemente (7a, 7b, 8a, 8b, 6a, 9a) angeschlossen sind, **dadurch gekennzeichnet, dass** die Versteifungseinlagen (4.1, 5.1) zusammen mit den Montageelementen (6a, 9a) längliche Profilelemente (6, 9) mit einem U-Querschnitt darstellen, wobei ein der Arme (6a, 9a) jedes U-Profilelements ein Montageelement darstellt und nach außen der Wand (2, 3) des Körpers (1, 1.1) des Leistenverbindungsstücks reicht, um die Verbindung mit der Sockelleiste herzustellen.

2. Leistenverbindungsstück nach Anspruch 1, **dadurch gekennzeichnet, dass** der Außenarm (6a, 9a) jedes U-Profilelements (6, 9) einen transversalen Einschnitt (10, 11) aufweist.

3. Leistenverbindungsstück nach Anspruch 1, **dadurch gekennzeichnet, dass** die Versteifungseinlagen (4, 5, 4.1, 5.1) aus einem thermoplastischen Polymer angefertigt sind.

4. Leistenverbindungsstück nach Anspruch 1, **dadurch gekennzeichnet, dass** der Körper (1, 1.1) aus einem thermoplastischen Elastomer angefertigt ist.

5. Leistenverbindungsstück nach einem der vorhergehenden Ansprüche, **dadurch gekennzeichnet, dass** sich die Einlagen (4, 5, 4.1, 5.1) fast entlang der ganzen Länge der Wände (2, 3)des Körpers erstrecken.

## Revendications

1. Attache pour une bande, notamment pour une plinthe, comportant un corps (1, 1.1) ayant deux parois dont la forme extérieure est adaptée au profil de la plinthe, l'attache étant munie des éléments d'accrochage (7a, 7b, 8a, 8b, 6a, 9a), ledit corps (1, 1.1) étant fait en matière souple plastique, et les parois (2, 3) du corps étant pourvues des insertions raidisseures (4, 5, 4.1, 5.1) en matière rigide plastique, les insertions étant accrochées aux parois (2, 3) et s'étendant le long des dites parois, les éléments d'accrochage (7a, 7b, 8a, 8b, 6a, 9a) étant intégralement et fixement raccordés à chaque insertion raidisseure (4, 5, 4.1, 5.1), **caractérisé en ce que** les insertions raidisseures (4.1, 5.1) forment avec les éléments d'accrochage (6a, 9a) des profilés longitudinaux (6, 9) ayant une section en "U", un bras (6a, 9a) de chaque profilé en "U" constituant un élément d'accrochage s'étendant en dehors de la parois (2, 3) du corps de l'attache pour créer une connection avec la plinthe.

2. Attache selon la revendication 1, **caractérisé en ce que** le bras extérieur (6a, 9a) de chaque profilé (6, 9) en "U" a une échancrure transversale (10, 11).

3. Attache selon la revendication 1, **caractérisé en ce que** les insertions raidisseures (4, 5, 4.1, 5.1) sont fait en polymère thermoplastique.

4. Attache selon la revendication 1, **caractérisé en ce que** le corps (1, 1.1) est fait en élastomère thermoplastique.

5. Attache selon l'une des revendications 1 à 4 , **caractérisé en ce que** les insertions (4, 5, 4.1, 5.1) s'étendent le long presque toute la longueur des parois (2, 3) du corps.
